# EUROPÄISCHE PATENTSCHRIFT

(11) **EP 0 994 162 B1**
(45) Veröffentlichungstag und Bekanntmachung des Hinweises auf die Patenterteilung: **14.01.2004**
(21) Anmeldenummer: 99119099.2
(22) Anmeldetag: 04.10.1999
(51) Int. Cl.: C09B 45/14, C09B 67/10, C09B 67/22, C09B 67/36

(54) **Metallkomplexpigmente**
Metal complex pigments
Pigments de complexes métalliques

(30) Priorität: 15.10.1998 DE 19847586; 29.05.1999 DE 19924764
(43) Veröffentlichungstag der Anmeldung: 19.04.2000
(73) Patentinhaber: Bayer Chemicals AG, 51368 Leverkusen (DE)
(72) Erfinder: Linke, Frank, 51069 Köln (DE); Faubion, Kent, 51381 Leverkusen (DE); Herrmann, Udo, Dr., 41541 Dormagen (DE); Pfützenreuter, Dirk, 51399 Burscheid (DE); Göbel, Ronald, 51371 Leverkusen (DE)

(56) Entgegenhaltungen:
- EP-A- 0 073 463
- EP-A- 0 074 515
- CH-A- 350 746

## Beschreibung

Die Erfindung betrifft neue Metallkomplexpigmente, Verfahren zu ihrer Herstellung sowie ihre Verwendung.

Aus EP-A-73 463 sind bereits koloristisch wertvolle Pigmente bekannt. Diese haben aber noch anwendungstechnische Nachteile. So sind die auf die beschriebene Weise hergestellten Pigmente beispielsweise sehr kornhart und müssen zur Erreichung der gewünschten Coloristik und damit der entsprechenden Teilchengröße in relativ zeitaufwendigen Dispergierverfahren verkleinert werden. Gleichsam weisen derartige Pigmente noch einige Nachteile in ihrer Dispergierbarkeit sowie ihrer Farbstärke auf.

Aufgabe der vorliegenden Erfindung war es daher, neue Pigmentformen bereitzustellen, die die oben beschriebenen Nachteile nicht mehr aufweisen.

Die Erfindung betrifft Metallkomplexe einer Azo-Verbindung, die in Form ihrer tautomeren Strukturen der Formel (I) entspricht 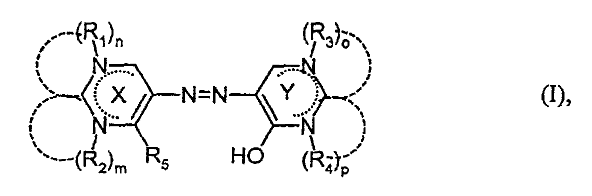 worin die mit
- X und Y: bezeichneten Ringe unabhängig voneinander je einen oder zwei Substituenten aus der Reihe =O, =S, =NR₇, -NR₆H₇, -OR₆, -SR₆, -COOR₆, - CN, -CONR₆R₇, -SO₂R₈, 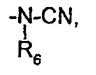 Alkyl, Cycloalkyl, Aryl und Aralkyl tragen können, wobei die Summe der endo- und exocyclischen Doppelbindungen für jeden der Ringe X und Y drei ist,
R₆ für Wasserstoff, Alkyl, Cycloalkyl, Aryl oder Aralkyl und
R₇ für Wasserstoff, Cyan, Alkyl, Cycloalkyl, Aryl, Aralkyl oder Acyl stehen und
R₈ Alkyl, Cycloalkyl, Aryl oder Aralkyl bezeichnet,
R₁, R₂, R₃, R₄ unabhängig voneinander für Wasserstoff, Alkyl, Cycloalkyl, Aryl oder Aralkyl stehen und weiterhin, wie in Formel (I) durch die unterbrochenen Linien angedeutet wird, 5- oder 6-gliedrige Ringe ausbilden können, an die weitere Ringe ankondensiert sein können,
R₅ -OH, -NR₆R₇, Alkyl, Cycloalkyl, Aryl oder Aralkyl bedeutet, wobei die für R₁ bis R₈ genannten CH-Bindungen enthaltenden Substituenten ihrerseits substituiert sein können und m, n, o, p 1 oder für den Fall, daß von den Ring-Stickstoffatomen Doppelbindungen ausgehen, wie in Formel (I) durch die punktierten Linien angedeutet wird, auch Null bedeuten können,
und die wenigstens eine Verbindung eingelagert enthalten, dadurch gekennzeichnet, daß sie eine Dispergierhärte von kleiner 250 (gemessen nach DIN 53 775) aufweisen.

Bevorzugte organische Metallkomplexe sind dabei solche von Azo-Verbindungen, die in Form ihrer freien Säure einer der tautomeren Formen der Formel (I) entsprechen, bei denen der mit X gekennzeichnete Ring für einen Ring der Formeln 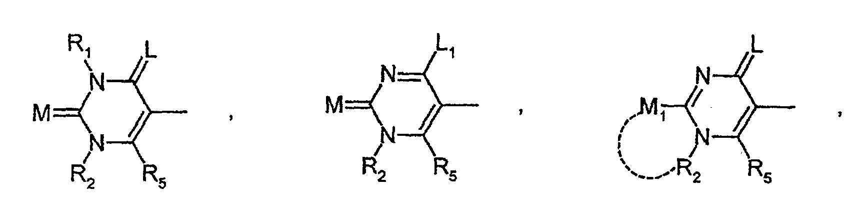 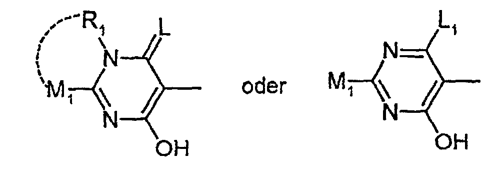 steht, in denen
- L und M: unabhängig voneinander für =O, =S oder =NR₆ stehen
- L₁: Wasserstoff, -OR₆, -SR₆, -NR₆R₇, -COOR₆, -CONR₆R₇, -CN, Alkyl, Cycloalkyl, Aryl oder Aralkyl und
- M₁: -OR₆, -SR₆, -NR₆R₇, -COOR₆, -CONR₆R₇, -CN, -SO₂R₈, 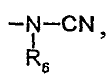 Alkyl, Cycloalkyl, Aryl oder Aralkyl bezeichnen, wobei die Substituenten M₁ und R₁ oder M₁ und R₂ einen 5- oder 6-gliedrigen Ring ausbilden können.

Besonders bevorzugte organische Metallkomplexe sind dabei solche von Azo-Verbindungen, die in Form ihrer freien Säuren einer ihrer tautomeren Strukturen der Formeln (II) oder (III) entsprechen 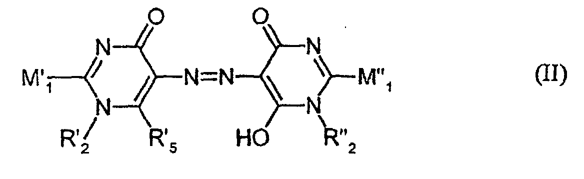 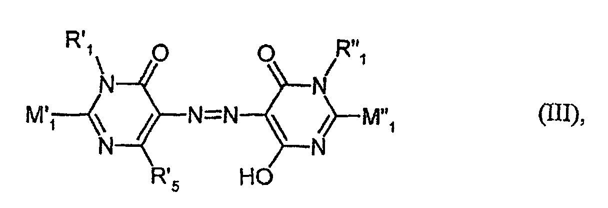 in denen
- R'₅: -OH oder -NH₂ bezeichnet,
- R'₁, R''₁, R'₂ und R"₂: jeweils für Wasserstoff steht und
- M'₁ und M"₁: unabhängig voneinander für Wasserstoff, -OH, -NH₂, -NHCN, Arylamino oder Acylamino stehen.

Ganz besonders bevorzugte Metallkomplexe sind dabei solche von Azo-Verbindungen der Formel (I), die in Form ihrer freien Säure einer der tautomeren Strukturen der Formel (IV) entsprechen 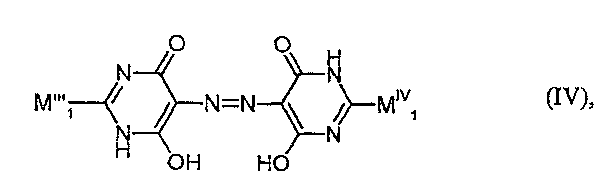 in denen
- M^{III}₁und M^{IV}₁: unabhängig voneinander OH und NHCN bedeuten.

Bevorzugt vor allem sind dabei organische Metallkomplexe solcher Azo-Verbindungen der Formel (I), die in Form ihrer freien Säure einer der tautomeren Strukturen der Formel (V) entsprechen

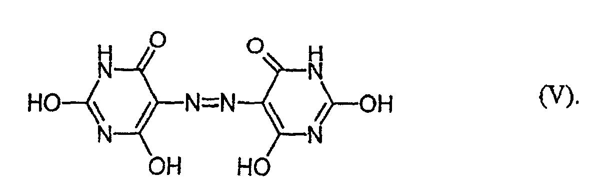

In den vorstehenden Formeln haben die Substituenten vorzugsweise die folgenden Bedeutungen:

Substituenten in der Bedeutung von Alkyl bezeichnen vorzugsweise C₁-C₆-Alkyl, das beispielsweise durch Halogen, wie Chlor, Brom oder Fluor, -OH, -CN, -NH₂ oder C₁-C₆-Alkoxy substituiert sein kann.

Substituenten in der Bedeutung von Cycloalkyl bezeichnen vorzugsweise C₃-C₇-Cycloalkyl, insbesondere C₅-C₆-Cycloalkyl, das beispielsweise durch C₁-C₆-Alkyl, C₁-C₆-Alkoxy, Halogen wie Cl, Br oder F, C₁-C₆-Alkoxy, -OH, -CN sowie NH₂ substituiert sein kann.

Substituenten in der Bedeutung von Aryl bezeichnen vorzugsweise Phenyl oder Naphthyl, die beispielsweise durch Halogen wie F, Cl oder Br, -OH, C₁-C₆-Alkyl, C₁-C₆-Alkoxy, -NH₂, -NO₂ sowie -CN sustituiert sein können.

Substituenten in der Bedeutung von Aralkyl bezeichnen bevorzugt Phenyl- oder Naphthyl-C₁-C₄-alkyl, die in den aromatischen Resten beispielsweise durch Halogen wie F, Cl oder Br, -OH, C₁-C₆-Alkyl, C₁-C₆-Alkoxy, -NH₂, -NO₂ sowie -CN substituiert sein können.

Substituenten in der Bedeutung von Acyl bezeichnen vorzugsweise (C₁-C₆-Alkyl)-carbonylcarbonyl, Phenylcarbonyl, C₁-C₆-Alkylsulfonyl, Phenylsulfonyl, gegebenenfalls durch C₁-C₆-Alkyl, Phenyl und Naphthyl substituiertes Carbamoyl, gegebenenfalls durch C₁-C₆-Alkyl, Phenyl und Naphthyl substituiertes Sulfamoyl oder gegebenenfalls durch C₁-C₆-Alkyl, Phenyl oder Naphthyl substituiertes Guanyl, wobei die genannten Alkylreste beispielsweise durch Halogen wie Cl, Br oder F, -OH, -CN, -NH₂ oder C₁-C₆-Alkoxy substituiert sein können und die genannten Phenyl- und Naphthylreste beispielsweise durch Halogen wie F, Cl oder Br, -OH, C₁-C₆-Alkyl, C₁-C₆-Alkoxy, -NH₂, -NO₂ und -CN substituiert sein können.

Für den Fall, daß M₁R₁ oder M₁R₂ oder M₁R₂ bzw. R₁, R₂, R₃, R₄, wie in Formel (I) durch die unterbrochenen Linien angedeutet wird, 5- oder 6-gliedrige Ringe ausbilden, handelt es sich vorzugsweise um Triazol-, Imidazol- oder Benzimidazol-, Pyrimidin- oder Chinazolin-Ringsysteme.

Als Metallkomplexe, worunter auch -Salze verstanden werden, der Formeln (I) bis (V) kommen vorzugsweise die Salze und Komplexe der Mono-, Di-, Tri- und Tetraanionen mit den Metallen Li, Cs, Mg, Cd, Co, Al, Cr, Sn, Pb, besonders bevorzugt Na, K, Ca, Sr, Ba, Zn, Fe, Ni, Cu und Mn, in Betracht.

Besonders bevorzugt sind Salze und Komplexe der Formeln (I) bis (V) mit zwei- oder dreiwertigen Metallen, ganz besonders die Nickelsalze und -komplexe.

Die Metallkomplexe die wenigstens eine Verbindung, insbesondere organische Verbindung eingelagert enthalten, können als Einlagerungsverbindungen, Interkalationsverbindungen sowie als feste Lösungen vorliegen.

Ganz besonders bevorzugt handelt es sich um Einschlußverbindungen, Interkalationsverbindungen und feste Lösungen, bei denen der Azobarbitursäure-Nickel-1:1-Komplex einer der tautomeren Formen der Formel 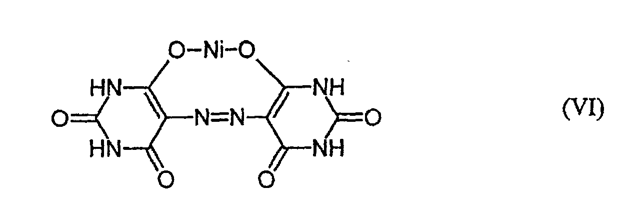 entspricht, und mindestens eine andere organische Verbindung eingeschlossen enthält.

Im allgemeinen bildet der Metallkomplex ein schichtförmiges Kristallgitter, bei dem die Bindung innerhalb einer Schicht im wesentlichen über Wasserstoffbrücken und/oder Metallionen erfolgt. Vorzugsweise handelt es sich dabei um Metallkomplexe, die ein Kristallgitter ausbilden, das aus im wesentlichen ebenen Schichten besteht.

Im Rahmen dieser Anmeldung werden die Metallkomplexe der Azoverbindungen der Formel (I), die wenigstens eine Verbindung eingelagert enthalten und eine Dispergierhärte von weniger als 250 aufweisen als erfindungsgemäße Pigmente bezeichnet. In einer bevorzugten Ausführungsform besitzen die erfindungsgemäßen Pigmente eine Dispergierhärte von kleiner 200, insbesondere kleiner 150.

Die Dispergierhärte wird gemessen nach DIN 53 775, Teil 7, wobei die Temperatur der Kaltwalzung 25°C und die der Warmwalzung 150°C beträgt.

Sämtliche in dieser Anmeldung angegebenen Dispergierhärten wurden nach dieser modifizierten DIN-Vorschrift bestimmt.

In einer bevorzugten Ausführungsform besitzt das erfindungsgemäße Pigment eine spezifische Oberfläche BET von kleiner 150 m²/g, insbesondere von 50 bis 130 m²/g.

Als Metallkomplexe kommen auch solche in Frage, bei denen eine metallhaltige Verbindung, z.B. ein Salz oder Metallkomplex in das Kristallgitter eines anderen Metallkomplexes z.B. des Nickelkomplexes eingebaut ist. In diesem Fall kann in Formel (VI) ein Teil des Metalls, z.B. des Nickels durch andere Metallionen ersetzt sein oder es können weitere Metallionen in eine mehr oder weniger starke Wechselwirkung mit dem Metall, vorzugsweise Nickelkomplex treten.

Eingeschlossen sein können sowohl organische als auch anorganische Verbindungen. Verbindungen, die eingeschlossen sein können, entstammen den verschiedenartigsten Verbindungsklassen. Aus rein praktischen Gründen sind solche Verbindungen bevorzugt, die unter Normalbedingungen (25°C, 1 bar) flüssig oder fest sind.

Von den flüssigen Substanzen sind wiederum solche bevorzugt, die einen Siedepunkt (1 bar) von 100°C oder darüber, bevorzugt von 150°C und darüber, aufweisen. Geeignete Verbindungen sind vorzugsweise acyclische und cyclische organische Verbindungen, z.B. aliphatische und aromatische Kohlenwasserstoffe, die substituiert sein können, z.B. durch OH, COOH, NH₂, substituiertes NH₂, CONH₂, substituiertes CONH₂, SO₂NH₂, substituiertes SO₂NH₂, SO₃H, Halogen, NO₂, CN, -SO₂-Alkyl, -SO₂-Aryl, -O-Alkyl, -O-Aryl, -O-Acyl.

Im einzelnen seien z.B. genannt: Paraffine und Paraffinöle; Triisobutylen, Tetraisobutylen, Mischungen von aliphatischen und aromatischen Kohlenwasserstoffen, wie sie z.B. bei der Erdölfraktionierung anfallen; chlorierte Paraffinkohlenwasserstoffe wie Dodecylchlorid oder Stearylchlorid; C₁₀-C₃₀-Alkohole wie 1-Decanol, 1-Dodecanol, 1-Hexadecanol, 1-Octadecanol und ihre Mischungen, Oleinalkohol, 1,12-Octadecandiol, Fettsäuren und ihre Salze und Mischungen, z.B. Ameisensäure, Essigsäure, Dodecansäure, Hexadecansäure, Octadecansäure, Ölsäure, Fettsäureester, z.B. die Methylester der C₁₀-C₂₀-Fettsäuren, Fettsäureamide, wie Stearinsäureamid, Stearinsäuremonoethanolamid, Stearinsäurediethanolamid, Stearinsäurenitril, Fettamine, z.B. Dodecylamin, Cetylamin, Hexadecylamin, Octadecylamin und andere; Salze von Fettaminen mit Sulfon- und Carbonsäuren, isocyclische Kohlenwasserstoffe wie Cyclododecan, Decahydronaphthalin, o-, m-, p-Xylol, Mesitylen, Dodecylbenzolgemisch, Tetralin, Naphthalin, 1-Methylnaphthalin, 2-Methylnaphthalin, Biphenyl, Diphenylmethan, Acenaphthen, Fluoren, Anthracen, Phenanthren, m-, p-Terphenyl, o-, p-Dichlorbenzol, Nitrobenzol, 1-Chlornaphthalin, 2-Chlornaphthalin, 1-Nitronaphthalin, isocyclische Alkohole und Phenole und ihre Abkömmlinge wie Benzylalkohol, Decahydro-2-naphthol, Diphenylether, Sulfone, z.B. Diphenylsulfon, Methylphenylsulfon, 4,4'-Bis-2-(hydroxyethoxy)-diphenylsulfon; isocyclische Carbonsäuren und ihre Derivate wie Benzoesäure, 3-Nitrobenzoesäure, Zimtsäure, 1-Naphthalincarbonsäure, Phthalsäure, Phthalsäuredibutylester, Phthalsäuredioctylester, Tetrachlorphthalsäure, 2-Nitrobenzamid, 3-Nitrobenzamid, 4-Nitrobenzamid, 4-Chlorbenzamid, Sulfonsäuren, wie 2,5-Dichlorbenzolsulfonsäure, 3-Nitro-, 4-Nitro-benzolsulfonsäure, 2,4-Dimethylbenzolsulfonsäure, 1- und 2-Naphthalinsulfonsäure, 5-Nitro-1- und 5-Nitro-2-naphthalinsulfonsäure, Di-sec.-butyl-naphthalinsulfonsäuregemisch, Biphenyl-4-sulfonsäure, 1,4-, 1,5-, 2,6-, 2,7-Naphthalindisulfonsäure, 3-Nitro-1,5-naphthalindisulfonsäure, Anthrachinonsulfonsäure-1, Anthrachinonsulfonsäure-2, Diphenyl-4,4'-disulfonsäure, 1,3,6-Naphthalintrisulfonsäure und die Salze dieser Sulfonsäuren z.B. die Natrium-, Kalium-, Calcium-, Zink-, Nickel- und Kupfersalze; Sulfonamide wie Benzolsulfonamid, 2-, 3- und 4-Nitrobenzolsulfonamid, 2-, 3- und 4-Chlorbenzolsulfonamid, 4-Methoxy-benzolsulfonamid, 3,3'-Sulfonylbisbenzolsulfonamid, 4,4'-Oxybisbenzolsulfonsäureamid, 1- und 2-Naphthalinsulfonsäureamid.

Carbonsäure- und Sulfonsäureamide sind eine bevorzugte Gruppe von einzuschließenden Verbindungen, insbesondere geeignet sind auch Harnstoff und substituierte Harnstoffe wie Phenylharnstoff, Dodecylharnstoff und andere; sowie deren Polykondensate mit Aldehyden, insbesondere Formaldehyd, Heterocyclen wie Barbitursäure, Benzimidazolon, Benzimidazolon-5-sulfonsäure, 2,3-Dihydroxychinoxalin, 2,3-Dihydroxychinoxalin-6-sulfonsäure, Carbazol, Carbazol-3,6-disulfonsäure, 2-Hydroxychinolin, 2,4-Dihydroxychinolin, Caprolactam, Melamin, 6-Phenyl-1,3,5-triazin-2,4-diamin, 6-Methyl-1,3,5-triazin-2,4-diamin, Cyanursäure.

Bevorzugte feste Lösungen, Interkalationsverbindungen oder Einschlußverbindungen enthalten eingeschlossen grenzflächenaktive Verbindungen, insbesondere Tenside, die z.B. aus K. Lindner, Tenside-Textilhilfsmittel-Waschrohstoffe, 2. Auflage, Band I, Wissenschaftliche Verlagsgesellschaft mbH, Stuttgart, 1964, bekannt sind. Dabei kann es sich um anionenaktive, nichtionogene oder kationenaktive Verbindungen oder um Ampholyte handeln. Geeignete anionenaktive Verbindungen sind z.B.: Echte Seifen, Salze der Aminocarbonsäuren, Salze niederer bzw. höherer acylierter Aminocarbonsäuren, Fettsäuresulfate, Sulfate von Fettsäureestern, -amiden usw., primäre Alkylsulfate, Sulfate von Oxoalkoholen, sekundäre Alkylsulfate, Sulfate veresterter oder veretherter Polyoxyverbindungen, Sulfate substituierter Polyglykolether (sulfatierte Ethylenoxidaddukte), Sulfate acylierter oder alkylierter Alkanolamine, Sulfonate von Fettsäuren, ihren Estern, Amiden usw., primäre Alkylsulfonate, sekundäre Alkylsulfonate, Alkylsulfonate mit esterartig gebundenen Acylen, Alkyl- bzw. Alkylphenylethersulfonate, Sulfonate von Polycarbonsäureestern, Alkylbenzolsulfonate, Alkylnaphthalinsulfonate, fettaromatische Sulfonate, Alkylbenzimidazolsulfonate, Phosphate, Polyphosphate, Phosphonate, Phosphinate, Thiosulfate, Hydrosulfite, Sulfinate, Persulfate. Geeignete nicht-ionogene Verbindungen sind z.B.: Ester und Ether von Polyalkoholen, Alkylpolyglykolether, Acylpolyglykolether, Alkylarylpolyglykolether, acylierte bzw. alkylierte Alkanolaminpolyglykolether. Geeignete kationenaktive Verbindungen sind z.B.: Alkylaminsalze, quaternäre Ammoniumsalze, Alkylpyridiniumsalze, einfache und quaternäre Imidazolinsalze, Alkyldiamine bzw. Alkylpolyamine, Acyldiamine bzw. Acylpolyamine, Acylalkanolamine, Alkanolaminester, Alkyl-OCH₂-N-pyridiniumsalze, Alkyl-CO-NH-CH₂-N-pyridiniumsalze, Alkylethylenharnstoffe, Sulfoniumverbindungen, Phosphoniumverbindungen, Arseniumverbindungen, Alkylguanidine, Acylbiguanidide. Geeignete Ampholyte sind z.B.: Alkylbetaine, Sulfobetaine und Aminocarbonsäuren. Bevorzugt eingesetzt werden nichtionogene Tenside, insbesondere die Ethylenoxidadditionsprodukte von Fettalkoholen, Fettaminen sowie von Octyl- oder Nonylphenol. Eine weitere wichtige Gruppe von eingelagerten Verbindungen sind natürliche Harze und Harzsäuren wie z.B. Abietinsäure und ihre Umwandlungsprodukte und Salze. Solche Umwandlungsprodukte sind z.B. hydrierte, dehydrierte und disproportionierte Abietinsäuren. Diese können weiterhin dimerisiert, polymerisiert oder durch Addition von Maleinsäureanhydrid und Fumarsäure modifiziert sein. Von Interesse sind auch die an der Carboxylgruppe modifizierten Harzsäuren wie z.B. die Methyl-, Hydroxyethyl-, Glykol-, Glycerin- und Pentaerythritester, sowie Harzsäurenitrile und Harzsäureamine sowie Dehydroabietylalkohol.

Ebenfalls für eine Einlagerung geeignet sind Polymere, vorzugsweise wasserlösliche Polymere, z.B. Ethylen-propylenoxid-Blockpolymere, vorzugsweise solche mit einem Mₙ größer 2000 g/mol, insbesondere größer 2000 und kleiner als 10.000 g/mol, Polyvinylalkohol, Poly-(meth)-acrylsäuren, modifizierte Cellulose, wie Carboxymethylcellulosen, Hydroxyethyl- und -propylcellulosen, Methyl- und Ethylhydroxyethylcellulosen.

Ebenfalls für die Einlagerung geeignet sind Kondensationsprodukte auf Basis von
A) sulfonierten Aromaten,
B) Aldehyden und/oder Ketonen und gegebenenfalls
C) einer oder mehrerer Verbindungen, ausgewählt aus der Gruppe der nicht sulfonierten Aromaten, Harnstoff und Harnstoffderivaten.

Auf Basis von bedeutet, daß das Kondensationsprodukt gegebenenfalls aus weiteren Reaktanden neben A, B und gegebenenfalls C hergestellt wurde. Vorzugsweise werden die Kondensationsprodukte im Rahmen dieser Anmeldung jedoch nur aus A, B und gegebenenfalls C hergestellt.

Als sulfonierte Aromaten der Komponente A) werden im Rahmen dieser Anmeldung auch sulfomethylierte Aromaten verstanden. Bevorzugte sulfonierte Aromaten sind: Naphthalinsulfonsäuren, Phenolsulfonsäuren, Dihydroxybenzolsulfonsäuren, sulfonierte Ditolylether, sulfomethyliertes 4,4'-Dihydroxydiphenylsulfon, sulfoniertes Diphenylmethan, sulfoniertes Biphenyl, sulfoniertes Hydroxybiphenyl, insbesondere 2-Hydroxybiphenyl, sulfoniertes Terphenyl oder Benzolsulfonsäuren.

Als Aldehyde und/oder Ketone der Komponente B) kommen insbesondere aliphatische, cycloaliphatische sowie aromatische in Frage. Bevorzugt sind aliphatische Aldehyde, wobei besonders bevorzugt Formaldehyd sowie andere aliphatische Aldehyde mit 3 bis 5 C-Atomen in Frage kommen.

Als nicht sulfonierte Aromaten der Komponente C) kommen beispielsweise Phenol, Kresol, 4,4'-Dihydroxydiphenylsulfon oder Dihydroxydiphenylmethan in Frage.

Als Harnstoffderivate können beispielsweise Dimethylolharnstoff, Alkylharnstoffe, Melamin oder Guanidin genannt werden.

Als bevorzugte Kondensationsprodukt wird eines auf Basis von
A) wenigstens einem sulfonierten Aromaten, ausgewählt aus der Gruppe von Naphthalinsulfonsäuren, Phenolsulfonsäuren, Dihydroxybenzolsulfonsäuren, sulfonierte Ditolylether, sulfomethyliertes 4,4'-Dihydroxydiphenylsulfon, sulfoniertes Diphenylmethan, sulfoniertes Biphenyl, sulfoniertes Hydroxybiphenyl, insbesondere 2-Hydroxybiphenyl, sulfoniertes Terphenyl und Benzolsulfonsäuren,
B) Formaldehyd und gegebenenfalls
C) einer oder mehreren Verbindungen, ausgewählt aus der Gruppe von Phenol, Kresol, 4,4'-Dihydroxydiphenylsulfon, Dihydroxydiphenylmethan, Harnstoff, Dimethylolharnstoff, Melamin und Guanidin
eingesetzt.

Bevorzugte Kondensationsprodukte sind solche auf Basis von 4,4'-Dihydroxydiphenylsulfon, sulfonierter Ditolylether und Formaldehyd; 4,4'-Dihydroxydiphenylsulfon, Phenolsulfonsäure und Formaldehyd; 4,4'-Dihydroxydiphenylsulfon, Natriumbisulfit, Formaldehyd und Harnstoff; Naphthalinsulfonsäure, 4,4-Dihydroxydiphenylsulfon und Formaldehyd; sulfoniertes Terphenyl und Formaldehyd; und/oder sulfoniertes 2-Hydroxybiphenyl und Formaldehyd sowie Naphthalinsulfonsäure und Formaldehyd.

Besonders bevorzugt werden als eingelagerte Verbindungen Melamin oder Melaminderivate, insbesondere solche der Formel (VII) 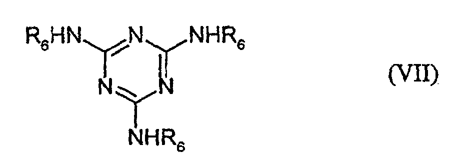 eingesetzt, worin
- R₆: für Wasserstoff oder C₁-C₄-Alkyl, das gegebenenfalls mit OH-Gruppen substituiert ist, steht,
ganz besonders bevorzugt, worin
- R₆: für Wasserstoff steht.

Die Menge an Substanz, die in das Kristallgitter des Metallkomplexes eingelagert werden kann, liegt in der Regel bei 5 % bis 200 Gew.-%, bezogen auf die Menge an Wirtsverbindung. Bevorzugt eingelagert werden 10 bis 100 Gew.-%. Es handelt sich hierbei um die Menge an Substanz, die durch geeignete Lösungsmittel nicht auswaschbar ist und die sich aus der Elementaranalyse ergibt. Naturgemäß kann auch mehr oder weniger als die genante Menge an Substanz zugesetzt werden, wobei man gegebenenfalls darauf verzichten kann, einen Überschuß auszuwaschen. Bevorzugt sind Mengen von 10 bis 150 Gew.-%.

Die Erfindung betrifft weiterhin ein Verfahren zur Herstellung der erfindungsgemäßen Pigmente, das dadurch gekennzeichnet ist, dass man Metallkomplexe einer Azo-Verbindung der Formel (I), die eine Verbindung eingelagert enthalten und eine Dispergierhärte von größer 250 (nach DIN 53 755) besitzen, herstellt und tempert, wobei
a) die Umsetzung der Azoverbindung der Formel (I) mit der Metallverbindung bei pH ≤ 2 und
a2) die anschließende Interkalation bei pH 1 bis 7 erfolgt, mit der Maßgabe, dass sofern die Interkalation bei pH < 4 durchgeführt wird, im Anschluß der pH auf < 4,5 angehoben wird und
b) die Temperung in Gegenwart von Wasser und gegebenenfalls organischen Lösungsmitteln bei einem pH von 1 bis 4, vorzugsweise 1 bis 3, insbesondere 1,5 bis 2,5, oder bei einem pH von 9 bis 13, vorzugsweise 10 bis 11 und bei einer Temperatur von 90 bis 140°C, insbesondere bei 95 bis 110°C, erfolgt.

Das Verfahren ist vorzugsweise dann beendet, wenn eine Dispergierhärte von weniger als 250 erreicht ist.

Das Verfahren erfolgt bei Temperaturen oberhalb von 100°C, vorzugsweise im Autoklaven.

Als mögliche organische Lösungsmittel sind wasserlösliche oder wassermischbare Lösungsmittel zu nennen. Es kommen auch Gemische verschiedener Lösungsmittel sowie gegebenenfalls auch polymere, hochsiedende Lösungsmittel mit einem Siedepunkt von höher als 250°C in Frage. Erfindungsgemäß besteht keine Einschränkung hinsichtlich der zu verwendenden Lösungsmittel. Insbesondere sind Verbindungen aus der Gruppe der aliphatischen-, cycloaliphatischen- oder aromatischen Kohlenwasserstoffe und Terpenkohlenwasserstoffe, ferner Alkohole, Glykol- und Polyglykolether, Ester und Ketone geeignet. In Frage kommen auch aminische Lösungsmittel, insbesondere solche auf Basis primärer, sekundärer und tertiärer, aliphatischer sowie aromatischer oder cycloaliphatischer Amine sowie deren Mischungen und Derivate.

Geeignete organische Lösungsmittel sind: aliphatische C₁-C₄-Alkohole, wie Methanol, Ethanol, Isopropanol, n-Propanol, n-Butanol, Isobutanol oder tert.-Butanol, aliphatische Ketone, wie Aceton, Methylethylketon, Methylisobutylketon oder Diacetonalkohol, Polyole, wie Ethylenglykol, Propylenglykol, Butylenglykol, Diethylenglykol, Triethylenglykol, Trimethylolpropan, Polyethylenglykol mit einem mittleren Molgewicht von 100 bis 4000, vorzugsweise 400 bis 1500 g/mol oder Glycerin, Monohydroxyether, vorzugsweise Monohydroxyalkylether, besonders bevorzugt Mono-C₁-C₄-alkylglykolether wie Ethylenglykolmonoalkyl-, -monomethyl-, -diethylenglykolmonomethylether oder Diethylenglykolmonoethylether, Diethylenglykolmonobutylether, Dipropylenglykolmonoethylether, Thiodiglykol, Triethylenglykolmonomethylether oder -monoethylether, ferner 2-Pyrrolidon, N-Methyl-2-pyrrolidon, N-Ethyl-pyrrolidon, N-Vinyl-pyrrolidon, 1,3-Dimethylimidazolidon, Dimethylacetamid sowie Dimethylformamid.

Bevorzugt besitzen sie einen Siedepunkt von größer 100°C/Normaldruck.

Zur Einstellung des pH-Wertes werden vorzugsweise anorganische oder organische Säuren und Basen eingesetzt

Als bevorzugte Säuren werden HCl, H₃PO₄, H₂SO₄, HI, HBr, Essigsäure und/oder Ameisensäure eingesetzt.

Als bevorzugte Basen werden LiOH, KOH, NaOH, Ca(OH)₂, NH₃, Ethanolamin, Diethanolamin, Triethanolamin und/oder Dimethylethanolamin eingesetzt.

In einer bevorzugten Ausführungsform erfolgte die Temperung bei pH-Werten von 1 bis 4.

Besonders bevorzugt werden als Pigmente mit einer Dispergierhärte von größer als 250 solche in das erfindungsgemäße Verfahren eingesetzt, die unmittelbar durch Umsetzung von Azoverbindungen der Formel (I) mit Metallsalzen, vorzugsweise solchen mit einer Wasserlöslichkeit von mehr als 20, insbesondere mehr als 50 g/l bei 20°C und anschließend durch Umsetzung mit der zu interkalierenden Verbindung erhalten werden.

Diese Eduktsuspension kann nun einerseits filtriert werden und das verbleibende Edukt vorzugsweise mit Wasser, insbesondere heißem Wasser gewaschen werden, um nicht interkalierte Anteile, Salze sowie sonstige Verunreinigungen abzutrennen. Das so zwischenisolierte gegebenenfalls getrocknete Edukt kann dann bei pH 1-4 oder 9 bis 13 bei 80 bis 180°C getempert werden.

Andererseits kann diese Eduktsuspension wieder auf einen pH von 1 bis 4 oder auf pH 9 bis 13 eingestellt werden und bei einer Temperatur von 80 bis 180°C getempert.

Die getemperte Suspension, enthaltend das erfindungsgemäße Pigment, wird vorzugsweise nach der Temperung erneut auf einen pH von 4,5 bis 7 gestellt. Danach wird vorzugsweise filtriert. Der so erhaltene Presskuchen kann gegebenenfalls nach Waschen mit Wasser getrocknet werden.

So kommen einerseits übliche Trocknungsverfahren wie die Schaufeltrocknung usw. in Frage. Mit derartigen Trocknungsverfahren und anschließender Mahlung des Pigments auf übliche Weise werden pulverförmige Pigmente erhalten.

Bevorzugt wird der Presskuchen als wäßrige Slurry sprühgetrocknet. Besonders bevorzugt erfolgt dies durch Versprühen eines Slurrys, der zur Erhöhung des Feststoffanteils Ammoniak enthält. Der zu versprühende Slurry besitzt vorzugsweise einen Feststoffanteil von 10 bis 40 Gew.-%, insbesondere 15 bis 30 Gew.-%.

Weiterhin können dem Slurry Viskositäts-erniedrigenden Zusätze wie Carbonsäure und Sulfonsäureamide in einer Menge von bis zu 10 Gew.-%, bezogen auf den Slurry zugesetzt werden.

Als Carbonsäure- und Sulfonsäureamide sind beispielsweise geeignet, Harnstoff und substituierte Harnstoffe wie Phenylharnstoff, Dodecylharnstoff und andere; Heterocyclen wie Barbitursäure, Benzimidazolon, Benzimidazolon-5-sulfonsäure, 2,3-Dihydroxychinoxalin, 2,3-Dihydroxychinoxalin-6-sulfonsäure, Carbazol, Carbazol-3,6-disulfonsäure, 2-Hydroxychinolin, 2,4-Dihydroxychinolin, Caprolactam, Melamin, 6-Phenyl-1,3,5-triazin-2,4-diamin, 6-Methyl-1,3,5-triazin-2,4-diamin, Cyanursäure.

Sofern weitere Zusätze verwendet werden sollen, werden sie vorzugsweise vor der Trocknung zugesetzt. Als solche kommen beispielsweise die nachstehend genannten Inhaltsstoffe der erfindungsgemäßen Präparationen in Frage:

Als für das Trocknen geeignete Trockner kommen grundsätzlich alle in Frage, beispielsweise Vakuumtrockner, Umlufttrockner, insbesondere Sprühtrockner, insbesondere Ein- und Zweistoff- sowie Rotationsscheibentrockner. Weiterhin kommen Wirbelbetttrocknungsverfahren in Frage.

Als Einstoffdüsentrockner kommen beispielsweise solche mit einer Drallkammerdüse in Frage.

In einer ganz besonders bevorzugten Ausführungsform des erfindungsgemäßen Verfahrens wird als Base Ammoniak gegebenenfalls zusammen mit weiteren bei der Trocknung nicht flüchtigen Basen eingesetzt und der so erhaltene wäßrige Slurry, vorzugsweise mit einem Feststoffgehalt von 5 bis 40 Gew.-%, sprühgetrocknet. Diese Verwendung von Ammoniak-haltigen Slurrys führt zu besonders vorteilhaften Granulaten, die sich durch sehr gute Dispergierfähigkeit, Farbstärke und Brillanz auf dem Substrat auszeichnen. Darüber hinaus sind sie rieselfähig und extrem staubarm.

Die Erfindung betrifft weiterhin Pigmentpräparationen, enthaltend wenigstens ein erfindungsgemäßes Pigment und wenigstens ein Dispergiermittel.

Unter Dispergiermittel im Rahmen dieser Anmeldung wird eine die Pigmentteilchen in ihrer feinen partikulären Form in wässrigen Medien stabilisierende Substanz verstanden. Unter fein partikulär wird vorzugsweise eine Feinverteilung von 0,001 bis 5 µm verstanden, insbesondere von 0,005 bis 1 µm, besonders bevorzugt von 0,005 bis 0,5 µm.

Geeignete Dispergiermittel sind beispielsweise anionisch, kationisch, amphoter oder nichtionogen.

Geeignete anionische Dispergiermittel sind insbesondere Kondensationsprodukte von aromatischen Sulfonsäuren mit Formaldehyd, wie Kondensationsprodukte aus Formaldehyd und Alkylnaphthalinsulfonsäuren oder aus Formaldehyd, Naphthalinsulfonsäuren und/oder Benzolsulfonsäuren, Kondensationsprodukte aus gegebenenfalls substituiertem Phenol mit Formaldehyd und Natriumbisulfit. Geeignet sind außerdem Dispergiermittel aus der Gruppe der Sulfobernsteinsäureester sowie Alkylbenzolsulfonate. Außerdem sulfatierte, alkoxylierte Fettsäurealkohole oder deren Salze. Als alkoxylierte Fettsäurealkohole werden insbesondere solche mit 5 bis 120, vorzugsweise 5 bis 60, insbesondere mit 5 bis 30 Ethylenoxid versehene C₆-C₂₂-Fettsäurealkohole, die gesättigt oder ungesättigt sind, insbesondere Stearylalkohol, verstanden. Besonders bevorzugt ist ein mit 8 bis 10 Ethylenoxideinheiten alkoxylierter Stearylalkohol. Die sulfatierten alkoxylierten Fettsäurealkohole liegen vorzugsweise als Salze, insbesonders als Alkali- oder Aminsalze, vorzugsweise als Diethylaminsalz vor. Weiterhin kommen vor allem Ligninsulfonate in Betracht, z.B. solche, die nach dem Sulfit- oder Kraft-Verfahren gewonnen werden. Vorzugsweise handelt es sich um Produkte, die zum Teil hydrolysiert, oxidiert, propoxyliert, sulfoniert, sulfomethyliert oder desulfoniert und nach bekannten Verfahren fraktioniert werden, z.B. nach dem Molekulargewicht oder nach dem Sulfonierungsgrad. Auch Mischungen aus Sulfit- und Kraftligninsulfonaten sind gut wirksam. Besonders geeignet sind Ligninsulfonate mit einem durchschnittlichen Molekulargewicht zwischen 1 000 und 100 000, einem Gehalt an aktivem Ligninsulfonat von mindestens 80 % und vorzugsweise mit niedrigem Gehalt an mehrwertigen Kationen. Der Sulfonierungsgrad kann in weiten Grenzen variieren.

Als nichtionische Dispergiermittel kommen beispielsweise in Frage: Umsetzungsprodukte von Alkylenoxiden mit alkylierbaren Verbindungen, wie z.B. Fettalkoholen, Fettaminen, Fettsäuren, Phenolen, Alkylphenolen, Arylalkylphenolen, wie Styrol-Phenol-Kondensate, Carbonsäureamiden und Harzsäuren. Hierbei handelt es sich z.B. um Ethylenoxidaddukte aus der Klasse der Umsetzungsprodukte von Ethylenoxid mit:
a1) gesättigten und/oder ungesättigten Fettalkoholen mit 6 bis 22 C-Atomen oder
bl) Alkylphenolen mit 4 bis 12 C-Atomen im Alkylrest oder
c1) gesättigten und/oder ungesättigten Fettaminen mit 14 bis 20 C-Atomen oder
d1) gesättigten und/oder ungesättigten Fettsäuren mit 14 bis 20 C-Atomen oder
e1) hydrierte und/oder unhydrierte Harzsäuren.

Als Ethylenoxid-Addukte kommen insbesondere die unter a1) bis e1) genannten alkylierbaren Verbindungen mit 5 bis 120, insbesondere 5 bis 100, insbesondere 5 bis 60, besonders bevorzugt 5 bis 30 Mol Ethylenoxid in Frage.

Als Dispergiermittel eignen sich ebenfalls die aus den prioritätsälteren DE-A 19 712 486 oder aus DE-A 19 535 246 bekannten Ester des Alkoxylierungsproduktes der Formel (X), die der Formel (XI) entsprechen sowie diese gegebenenfalls in Mischung mit den zugrundeliegenden Verbindungen der Formel (X). Das Alkoxylierungsprodukt eines Styrol-Phenol-Kondensats der Formel (X) ist wie nachfolgend definiert: 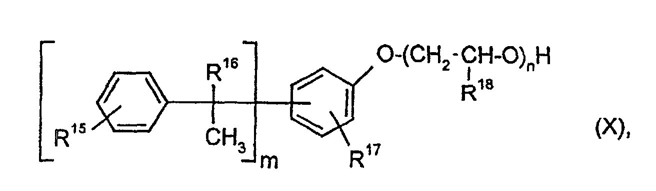 in der
- R¹⁵: Wasserstoff oder C₁-C₄-Alkyl bedeutet,
- R¹⁶: für Wasserstoff oder CH₃ steht,
- R¹⁷: Wasserstoff, C₁-C₄-Alkyl, C₁-C₄-Alkoxy, C₁-C₄-Alkoxycarbonyl oder Phenyl bedeutet,
- m: eine Zahl von 1 bis 4 bedeutet,
- n: eine Zahl von 6 bis 120 bedeutet,
- R¹⁸: für jede durch n indizierte Einheit gleich oder verschieden ist und für Was- serstoff, CH₃ oder Phenyl steht, wobei im Falle der Mitanwesenheit von CH₃ in den verschiedenen -(-CH₂-CH(R¹⁸)-O-)-Gruppen in 0 bis 60 % des Gesamtwertes von n R¹⁸ für CH₃ und in 100 bis 40 % des Gesamtwertes von n R¹⁸ für Wasserstoff steht und wobei im Falle der Mitanwesenheit von Phenyl in den verschiedenen -(-CH₂-CH(R¹⁸)-O-)-Gruppen in 0 bis 40 % des Gesamtwertes von n R¹⁸ für Phenyl und in 100 bis 60 % des Gesamtwertes von n R¹⁸ für Wasserstoff steht.

Die Ester der Alkoxylierungsprodukte (X) entsprechen der Formel (XI) 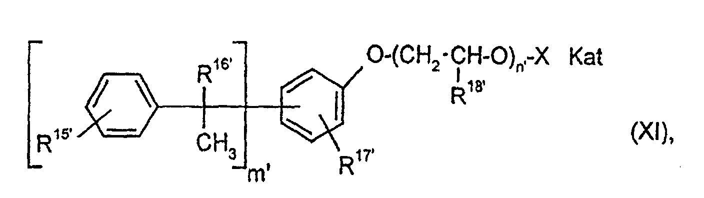 in der
- R^{15'}, R^{16'}, R^{17'}, R^{18'}, m' und n': den Bedeutungsumfang von R¹⁵, R¹⁶, R¹⁷, R¹⁸, m bzw. n, jedoch unabhängig hiervon, annnehmen,
- X: die Gruppe -SO₃, -SO₂, -PO₃ oder -CO-(R¹⁹)-COO bedeutet,
- Kat: ein Kation aus der Gruppe von H , Li , Na , K , NH₄ oder HO-CH₂CH₂-NH₃ ist, wobei im Falle von X =-PO₃ zwei Kat vorliegen und
- R¹⁹: für einen zweiwertigen aliphatischen oder aromatischen Rest steht, vorzugsweise für C₁-C₄-Alkylen, insbesondere Ethylen, C₂-C₄- einfach ungesättigte Reste, insbesondere Acetylen oder gegebenenfalls substituiertes Phenylen, insbesondere ortho-Phenylen steht, wobei als mögliche Substituenten vorzugsweise C₁-C₄-Alkyl, C₁-C₄-Alkoxy, C₁-C₄-Alkoxycarbonyl oder Phenyl in Frage kommen.

Spezielle Einzelverbindungen der Formel (XI) sind beispielsweise aus DE-A 19712486 und Gemische der Formeln (X) und (XI) sind beispielsweise DE-A-19 535 256 bekannt, die jeweils Bestandteile dieser Anmeldung sind.

Als ein bevorzugtes Dispergiermittel wird die Verbindung der Formel (XI) eingesetzt. Vorzugsweise eine Verbindung der Formel (XI), worin X einen Rest der Formel -CO-(R¹⁹)-COO- bedeutet und R¹⁹ die obige Bedeutung besitzt.

Bevorzugt ist ebenfalls als Dispergiermittel eine Verbindung der Formel (XI) zusammen mit einer Verbindung der Formel (X) einzusetzen. Vorzugsweise enthält das Dispergiermittel in diesem Fall 5 bis 99 Gew.-% der Verbindung (XI) und 1 bis 95 Gew.-% der Verbindung (X).

Als polymere Dispergiermittel kommen beispielsweise wasserlösliche sowie wasseremulgierbare Typen in Frage, z.B. Homo- sowie Co-Polymerisate, wie statistischeoder Block-Copolymerisate.

Besonders bevorzugte Dispergiermittel sind polymere Dispergiermittel wie beispielsweise AB-, BAB- und ABC-Blockcopolymere. In den AB- oder BAB-Block-copolymeren ist das A-Segment ein hydrophobes Homopolymer oder Copolymer, das eine Verbindung zum Pigment sicherstellt und der B-Block ein hydrophiles Homopolymer oder Copolymer oder ein Salz davon und stellt das Dispergieren des Pigmentes im wäßrigen Medium sicher. Derartige polymere Dispergiermittel und deren Synthese sind beispielsweise aus EP-A 518 225 sowie EP-A 556 649 bekannt.

Das Dispergiermittel wird vorzugsweise in einer Menge von 0,1 bis 100 Gew.-%, insbesondere 0,5 bis 60 Gew.-%, bezogen auf das eingesetzte Pigment in der Pigmentpräparation, verwendet.

Selbstverständlich kann die Präparation noch weitere Zusätze enthalten. So können beispielsweise die als die Viskosität einer wäßrigen Suspension emiedrigenden und den Feststoffgehalt erhöhenden Zusätze wie die oben für die Sprühtrocknung genannten Carbonsäure- und Sulfonsäureamide in einer Menge von bis zu 10 Gew.-%, bezogen auf die Präparation zugesetzt werden. Ebenfalls sind die für Pigmentpräparation üblichen Zusätze möglich.

Besonders bevorzugt enthält die erfindungsgemäße Präparation aber mehr als 90 insbesondere mehr als 95, vorzugsweise mehr als 97 Gew.-% an Pigment und gegebenenfalls Dispergiermittel.

Ebenfalls bevorzugt sind Pigmentpräparationen, die eine Viskosität von kleiner 80 mPa·s in einem Alkydmelaminlacksystem, oder kleiner 50 mPa·s⁻¹ in einem wäßrigen Lacksystem oder kleiner 300 mPas in einem wäßrigen Bindersystem jeweils gemessen nach DIN 53 019 aufweisen.

Einschlußverbindungen, Interkalationsverbindungen und feste Lösungen der Metallverbindungen an sich sind aus der Literatur bekannt. Sie werden ebenso wie deren Herstellung beispielsweise in der EP 0 074 515 und der EP 0 073 463 beschrieben. Bei den Produkten, die man nach den dort beschriebenen Herstellungsverfahren erhält, handelt es sich jedoch um kornharte und schwer dispergierbare Formen, was die Verwendung als Pigmente ganz erheblich erschwert.

Die Herstellung für diese Verbindungen wie sie beispielsweise in EP 0 073 464 beschrieben wird, erfolgt so, daß nach der Synthese der Azoverbindung mit einem Metallsalz komplexiert wird und danach mit oder ohne Zwischenisolierung des Metall-Komplexes mit der zu interkalierenden Verbindung umgesetzt wird. Im Falle der technisch interessanten Interkalationsverbindungen der Metallkomplexe der zwei- und dreiwertigen Metalle, besonders der technisch und wirtschaftlichen wichtigen Interkalationsverbindung des Azobarbitursäure-Nickel-Komplexes, erfolgen Komplexierung und Interkalation sowie auch die nachfolgende Isolierung im sauren pH-Bereich.

Bei der Trocknung der so hergestellten Produkte erhält man aber unabhängig von den Trocknungsbedingungen, meist sehr kornharte und schwierig dispergierbare Pigmente, die oft auch nicht die gewünschte Farbstärken besitzen. Das Problem der Kornhärte und Dispergierbarkeit tritt insbesondere auch bei den technisch interessanten Interkalationsverbindungen des Azobarbitursäure-Nickel-Komplexes auf und hier in ganz besonderem Ausmaß bei der Interkalationsverbindung mit Melamin, der sowohl technisch wie wirtschaftlich erhebliche Bedeutung zukommt.

Es ist bekannt, Kornhärte, Dispergierbarkeit und Farbstärke von Pigmenten durch die unterschiedlichsten Methoden zu verbessern. Beispielsweise sind derartige Verfahren aus DE-A-2 214 700, DE-A-2 064 093 und DE-A-2 753 357 bekannt.

All diese Methoden sind aber sehr aufwendig und führen darüber hinaus nicht selten zu Verlusten in der Raum-Zeit-Ausbeute.

Völlig überraschend wurde nun gefunden, daß die erfindungsgemäßen Pigmentpräparationen erheblich kornweicher und sehr viel besser dispergierbar sind. Darüber hinaus besitzen damit pigmentierte Substrate eine vergleichsweise höhere Farbstärke sowie eine höhere Brillanz.

Ebenfalls bevorzugte Pigmentpräparationen sind solche, die in einem Alkyd-/Melaminharzsystem gemäß DIN 53 238, Teil 31 nach einer Dispergierzeit von bereits 2 Stunden eine von wenigstens 3, vorzugsweise mehr als 10, insbesondere mehr als 20 % höhere Farbstärke besitzen, als das Pigment dessen Dispergierhärte > 250 beträgt nach einer entsprechenden Dispergierung von 2 Stunden.

Die festen Pigmentpräparationen eignen sich hervorragend für alle Pigmentanwendungszwecke.

Zum Beispiel eignen sie sich zum Pigmentieren von Lacken aller Art für die Herstellung von Druckfarben, Leimfarben oder Binderfarben, für die Massefärbung von synthetischen, halbsynthetischen oder natürlichen makromolekularen Stoffen, wie z.B. Polyvinylchlorid, Polystyrol, Polyamid, Polyethylen oder Polypropylen. Sie können auch für die Spinnfärbung von natürlichen, regenerierten oder künstlichen Fasern, wie z.B. Cellulose-, Polyester-, Polycarbonat-, Polyacrylnitril- oder Polyamidfasern, sowie zum Bedrucken von Textilien und Papier verwendet werden. Aus diesen Pigmenten können feinteilige, stabile, wäßrige Pigmentierungen von Dispersions- und Anstrichfarben, die für die Papierfärbung, für den Pigmentdruck von Textilien, für den Laminatdruck oder für die Spinnfärbung von Viskose brauchbar sind, durch Mahlen oder Kneten in Gegenwart von nichtionogenen, anionischen oder kationischen Tensiden hergestellt werden.

### Beispiele

### Beispiel 1

425 g wasserfeuchte Paste einer Azobarbitursäure-Na-Salz mit einem Trockengehalt von 40 %, entsprechend 170 g trocken, werden 5 000 ml destilliertem Wasser mit einem Laborrührer homogen verrührt. Danach mit 122,4 g NiCl₂ x 6 H₂O und 126,1 g Melamin versetzt, anschließend wird auf 95°C erwärmt und 2 Stunden bei 95°C gerührt. Anschließend wird mit Natriumacetat die Suspension auf pH 5,0 gestellt. Danach wird auf einer Saugnutsche isoliert, elektrolytfrei gewaschen, bei 80°C im Vakuumtrockenschrank getrocknet und in einer üblichen Labormühle ca. 2 Minuten gemahlen.

Das so erhaltene Pigmentpulver hat eine Oberfläche von 160 m²/g.
- Dispergierhärte:: größer 250

### Beispiel 2

657 g wasserfeuchte Paste einer nach Beispiel 1 hergestellten Melamin-Interkalationsverbindung des Azobarbitursäure-Nickel-Komplexes mit einem Trockengehalt von 45 %, entsprechend 295,6 g trocken, werden in einer Vorlage von 5 000 ml destilliertem Wasser eingetragen, mit einem Laborrührer homogen verrührt, und mit Salzsäure auf einen sauren pH-Wert gestellt, anschließend im Autoklaven auf eine bestimmte Tempertur erwärmt und 2 Stunden bei dieser Temperatur und dem pH getempert (s. Tabelle). Danach wird auf 95°C abgekühlt und zum Isolieren mit Natronlauge auf pH 5,0 eingestellt.

Anschließend wird auf einer Saugnutsche isoliert, elektrolytfrei gewaschen, bei 80°C im Vakuumtrockenschrank getrocknet und in einer üblichen Labormühle ca. 2 Minuten gemahlen. Analog Beispiel 2 werden unter anderen Temperbedingungen ähnliche Eigenschaften erhalten (siehe Tabelle 1).

**Tabelle 1:**

| **Temperung** | | | | | | |
|---|---|---|---|---|---|---|
| **Bsp**. | **Temperatur (°C)** | **Zeit (h)** | **pH** | **Spez. Oberfläche BET m**^{**2**}**/g** | **Dispergierhärte**²⁾ | **Viskosität**³⁾**(mPa·s)** |
| 2 | 100 | 2 | 2 | 88 | < 250 | |
| 3 | 120 | 2 | 2 | 70 | <250 | |
| 4 | 140 | 2 | 2 | 67 | < 250 | |
| 5 | 160 | 2 | 2 | 54 | < 250 | |
| 6 | 95 | 2 | 1,5 | 80 | <250 | |
| 7 | 95 | 2 | 11 | 130 | < 250 | |
| 8¹⁾ | 95 | 2 | 2,5 | 120 | < 250 | |
| 9 | 90 | 2 | 2,0 | 130 | < 250 | |
| 10a | 98 | 0 | 2,0 | 160 | 530 | 1477⁴⁾ |
| 10b | 98 | 3 | 2,0 | 110 | 410 | 901⁴⁾ |
| 10c | 98 | 5 | 2,0 | 90 | 312 | 754⁴⁾ |
| 10d | 98 | 8 | 2,0 | 85 | 143 | 269⁴⁾ |
| 11a | 98 | 0 | 2,0 | 160 | 530 | 155⁵⁾ |
| 11b | 98 | 3 | 2,0 | 110 | 410 | 61⁵⁾ |
| 11c | 98 | 5 | 1,0 | 90 | 312 | 43⁵⁾ |
| 11d | 98 | 8 | 2,0 | 85 | 143 | 23⁵⁾ |
| 12a | 98 | 0 | 2,0 | 160 | 530 | 100⁶⁾ |
| 12b | 98 | 3 | 2,0 | 110 | 410 | 90⁶⁾ |
| 12c | 98 | 5 | 2,0 | 90 | 312 | 75⁶⁾ |
| 12d | 98 | 8 | 2,0 | 85 | 143 | 75⁶⁾ |
| 13 | 97 | 2 | 2,0 | 120 | 220 | 425 |

| | | | | | | |
|---|---|---|---|---|---|---|
| ¹⁾ Tempern ohne Zwischenisolierung; Pigmentsuspension wird bei pH 5 nicht isoliert, sondern wieder auf pH 2 gestellt (mit Salzsäure) und bei 95°C für 2 Stunden getempert. Danach wird auf pH 5 gestellt und wie in Beispiel 2 isoliert und aufgearbeitet. | | | | | | |
| ²⁾ gemessen nach DIN 53 775, Teil 7 | | | | | | |
| ³) gemessen mit einem Haake Rotationsviskosimeter RV20 | | | | | | |
| ⁴⁾ nach Einarbeitung in wäßrigen Binder | | | | | | |
| ⁵⁾ nach Einarbeitung in wäßriges Lacksystem | | | | | | |
| ⁶⁾ nach Einarbeitung in lösemittelhaltiges Lacksystem (Alkyd-Melamin nach DIN 53 019) | | | | | | |

### Beispiel 14

a) 425 g wasserfeuchte Paste einer Azobarbitur-Na-Salz mit einem Trockengehalt von 40 %, entsprechend 170 g trocken, werden 5 000 ml destilliertem Wasser mit einem Laborrührer vorrührt. Danach mit 122,4 g NiCl₂ x 6H₂O und 126,1 g Melamin versetzt anschließend wird auf 95°C erwärmt und 2 Stunden bei 95°C gerührt. Anschließend wird mit Natriumacetat die Suspension auf pH 5,0 gestellt. Danach wird auf einer Saugnutsche isoliert, elektrolytfrei gewaschen.
b) Anschließend wird die Hälfte der Paste in 2 500 ml destilliertem Wasser verrührt. Danach mit Salzsäure auf pH 2,0 und auf 97°C erwärmt, und bei dieser Temperatur 5 Stunden nachgerührt. Anschließend wird auf einer Saugnutsche isoliert und elektrolytfrei gewaschen.

Anschließend werden 3287,4 g wasserfeuchte Paste aus Beispiel 14a mit einem Trockengehalt von 45 %, entsprchend 147,8 g trocken in eine Vorlage von 29,6 g Ammoniaklösung 25 Gew.-%, 363 g entsalztem Wasser, 2,4 g Diethanolamin und 2,3 g ε-Caprolactam eingetragen. Danach wird mit einem Laborrührer homogen verrührt, die daraus resultierende Suspension hat einen Trockengehalt von 20,9 %.

Die nach Beispiel 14b hergestellte Melamin-Interkalationsverbindung des Azobarbitursäure-Nickel-Komplexes wird in 29,6 g Ammoniaklösung 25 Gew.-%, 130 g entsalztes Wasser, 2,4 g Diethanolamin und 2,3 g ε-Caprolactam eingetragen. Danach wird mit einem Laborrührer homogen verrührt. Im Gegensatz zur Suspension aus Beispiel 14a liegt der Trockengehalt bei 30,9 %.

Diese Suspensionen werden zur Sprühtrocknung eingesetzt.
- Dispergierhärte:: <250

Erhalten wird ein rieselfähiges, staubarmes Granulat.

## Patentansprüche

1. Metallkomplexe einer Azo-Verbindung, die in Form ihrer tautomeren Strukturen der Formel (I) entspricht 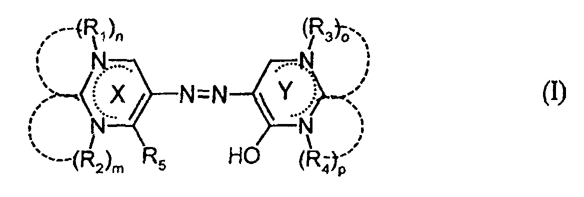 worin die mit
X und Y bezeichneten Ringe unabhängig voneinander je einen oder zwei Substituenten aus der Reihe =O, =S, =NR₇, -NR₆H₇, -OR₆, -SR₆, - COOR₆, -CN, -CONR₆R₇, -SO₂R₈, 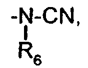 Alkyl, Cycloalkyl, Aryl und Aralkyl tragen können, wobei die Summe der endo- und exocyclischen Doppelbindungen für jeden der Ringe X und Y drei ist,
R₆ für Wasserstoff, Alkyl, Cycloalkyl, Aryl oder Aralkyl und
R₇ für Wasserstoff, Cyan, Alkyl, Cycloalkyl, Aryl, Aralkyl oder Acyl stehen und
R₈ Alkyl, Cycloalkyl, Aryl oder Aralkyl bezeichnet,
R₁, R₂, R₃, R₄ unabhängig voneinander für Wasserstoff, Alkyl, Cycloalkyl, Aryl oder Aralkyl stehen und weiterhin, wie in Formel (I) durch die unterbrochenen Linien angedeutet wird, 5- oder 6-gliedrige Ringe ausbilden können, an die weitere Ringe ankondensiert sein können,
R₅ -OH, -NR₆R₇, Alkyl, Cycloalkyl, Aryl oder Aralkyl bedeutet, wobei die für R₁ bis R₈ genannten CH-Bindungen enthaltenden Substituenten ihrerseits substituiert sein können und m, n, o, p 1 oder für den Fall, daß von den Ring-Stickstoffatomen Doppelbindungen ausgehen, wie in Formel (I) durch die punktierten Linien angedeutet wird, auch Null bedeuten können,
und die wenigstens eine Verbindung eingelagert enthalten,
**dadurch gekennzeichnet, daß** sie eine Dispergierhärte von kleiner 250 aufweisen.

2. Metallkomplexe gemäß Anspruch 1, **dadurch gekennzeichnet, daß** in der Verbindung der Formel (I) der mit X **gekennzeichnete** Ring für einen Ring der Formel 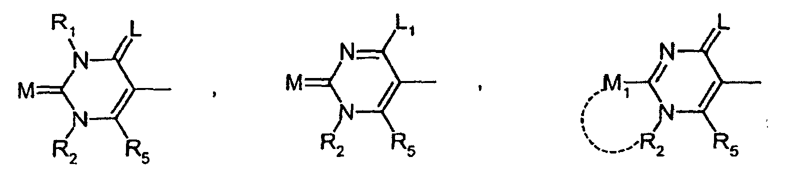 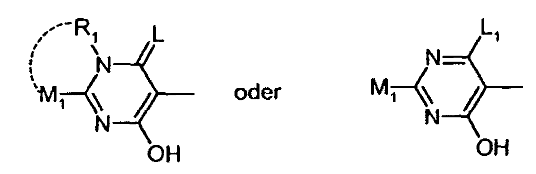 steht, in denen
L und M unabhängig voneinander für =O =S oder =NR₆ stehen
L₁ Wasserstoff, -OR₆, -SR₆, -NR₆R₇, -COOR₆, -CONR₆R₇, -CN, Alkyl, Cycloalkyl, Aryl oder Aralkyl und
M₁ -OR₆, -SR₆, -NR₆R₇, -COOR₆, -CONR₆R₇, -CN, -SO₂R₈, 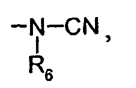 Alkyl, Cycloalkyl, Aryl oder Aralkyl bezeichnen, wobei die Substituenten M₁ und R₁ oder M₁ und R₂ einen 5- oder 6-gliedrigen Ring ausbilden können, und
R₁, R₂ und R₅ die in Anspruch 1 angegebenen Bedeutungen besitzen.

3. Metallkomplexe gemäß Anspruch 1, **dadurch gekennzeichnet, daß** die Azoverbindung der Formel (I) in Form ihrer freien Säure der Formel (II) oder (III) oder einer ihrer tautomeren Formeln entspricht 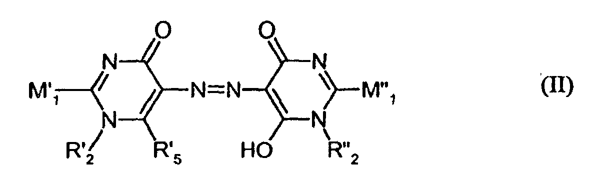 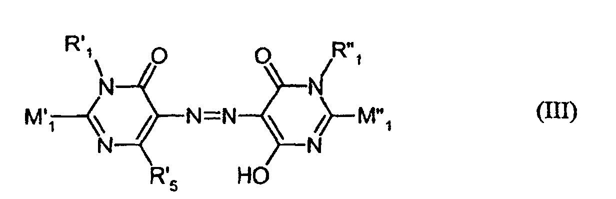 in denen
R'₅ -OH oder -NH₂ bezeichnet,
R'₁, R"₁, R'₂ und R"₂ jeweils für Wasserstoff steht und
M'₁ und M"₁ unabhängig voneinander für Wasserstoff, -OH, -NH₂, -NHCN, Arylamino oder Acylamino stehen.

4. Metallkomplexe gemäß Anspruch 1, **dadurch gekennzeichnet, daß** die Azoverbindung der Formel (I) der Formel (V) oder einer tautomeren Form davon entspricht

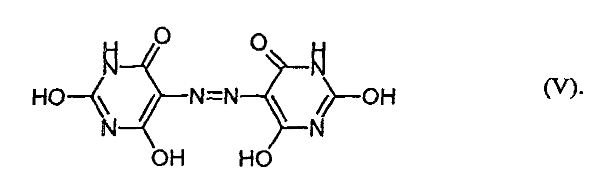

5. Metallkomplexe gemäß Anspruch 1, **dadurch gekennzeichnet, daß** als Metallverbindungen der Azoverbindung der Formel (I) die Salze und Komplexe der Mono-, Di-, Tri- und Tetraanionen mit den Metallen Li, Cs, Mg, Cd, Co, Al, Cr, Sn, Pb, bevorzugt Na, K, Ca, Sr, Ba, Zn, Fe, Ni, Cu und Mn eingesetzt werden.

6. Metallkomplexe gemäß Anspruch 1, **dadurch gekennzeichnet, daß** als Metallverbindung das Ni-Salz bzw. -Komplex der Azoverbindung der Formel (I) eingesetzt wird.

7. Metallkomplexe gemäß Anspruch 1, **dadurch gekennzeichnet, daß** sie eine cyclische oder acyclisch organische Verbindung, insbesondere Melamin eingelagert enthalten.

8. Metallkomplexe gemäß Anspruch 1, **dadurch gekennzeichnet, daß** sie eine spez. Oberfläche BET von kleiner 150 m²/g aufweisen.

9. Verfahren zur Herstellung der Metallkomplexe, gemäß Anspruch 1, **dadurch gekennzeichnet, daß** man Metallkomplexe einer Azo-Verbindung der Formel (I), die eine Verbindung eingelagert enthalten und eine Dispergierhärte von größer 250 besitzen, herstellt und tempert, wobei
a) die Herstellung durch
a1) die Umsetzung der Azoverbindung der Formel (I) mit der Metallverbindung bei pH ≤ 2 und
a2) die anschließende Interkalation bei pH 1 bis 7 erfolgt, mit, der Maßgabe, dass sofern die Interkalation bei pH < 4 durchgeführt wird, im Anschluß der pH auf > 4,5 angehoben wird, und
b) die Temperung in Gegenwart von Wasser und gegebenenfalls organischen Lösungsmitteln entweder bei einem pH von 1 bis 4, vorzugsweise 1 bis 3, insbesondere 1,5 bis 2,5 oder bei einem pH von 9 bis 13, vorzugsweise von 10 bis 11 und bei einer Temperatur von 90 bis 140°C, insbesondere bei 95 bis 100°C, erfolgt.

10. Pigmentpräparationen, enthaltend wenigstens ein Metallkomplex nach Anspruch 1 und ein Dispergiermittel.

11. Verwendung der Metallkomplexe gemäß Anspruch 1 zur Herstellung von Druckfarben, Leimfarben oder Binderfarben, für die Massefärbung von synthetischen, halbsynthetischen oder natürlichen makromolekularen Stoffen, insbesondere Polyvinylchlorid, Polystyrol, Polyamid, Polyethylen oder Polypropylen, sowie für die Spinnfärbung von natürlichen, regenerierten oder künstlichen Fasern, wie z.B. Cellulose-, Polyester-, Polycarbonat-, Polyacrylnitril- oder Polyamidfasern, sowie zum Bedrucken von Textilien und Papier.

## Claims

1. Metal complexes of an azo compound which in the form of its tautomeric structures conforms to the formula (I) 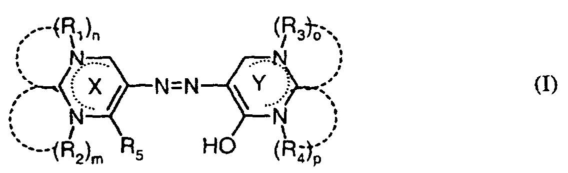 wherein
the rings X and Y may each independently bear one or two substituents selected from the group consisting of =O, =S, =NR₇, -NR₆H₇, -OR₆, -SR₆, -COOR₆, -CN, -CONR₆R₇, -SO₂R₈, 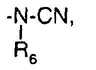 alkyl, cycloalkyl, aryl and aralkyl, the sum total of the endo- and exocyclic double bonds being three for each of the rings X and Y,
R₆ is hydrogen, alkyl, cycloalkyl, aryl or aralkyl,
R₇ is hydrogen, cyano, alkyl, cycloalkyl, aryl, aralkyl or acyl,
R₈ is alkyl, cycloalkyl, aryl or aralkyl,
R₁, R₂, R₃ and R₄ are each independently hydrogen, alkyl, cycloalkyl, aryl or aralkyl and furthermore, as indicated by the broken lines in the formula (I), may form 5- or 6-membered rings to which further rings may be fused,
R₅ is -OH, -NR₆R₇, alkyl, cycloalkyl, aryl or aralkyl, the substituents mentioned for R₁ to R₈ which contain CH bonds may in turn be substituted, and m, n, o and p are each 1 or, if the ring nitrogen atoms are the starting points for double bonds, as indicated by the dotted lines in the formula (I), may also be zero,
and which metal complexes host at least one compound as guest compound,
**characterized in that** they have a dispersion harshness of less than 250.

2. Metal complexes according to Claim 1, **characterized in that**, in the compound of the formula (I), the X ring represents a ring of the formula 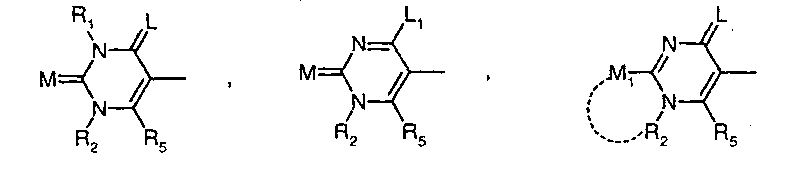 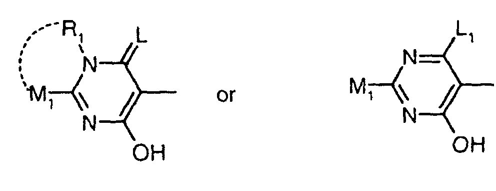 or where
L and M are each independently =O, =S or =NR₆,
L₁ is hydrogen, -OR₆, -SR₆, -NR₆R₇, -COOR₆, -CONR₆R₇, -CN, alkyl, cycloalkyl, aryl or aralkyl,
M₁ is -OR₆, -SR₆, -NR₆R₇, -COOR₆, -CONR₆R₇, -CN, -SO₂R₈, 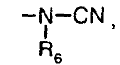 alkyl, cycloalkyl, aryl or aralkyl, and the substituents M₁ and R₁ or M₁ and R₂ may form a 5- or 6-membered ring, and
R₁, R₂ and R₅ are each as defined in Claim 1.

3. Metal complexes according to Claim 1, **characterized in that** the azo compound of the formula (I) in the form of its free acid conforms to the formula (II) or (III) or one of its tautomeric formulae 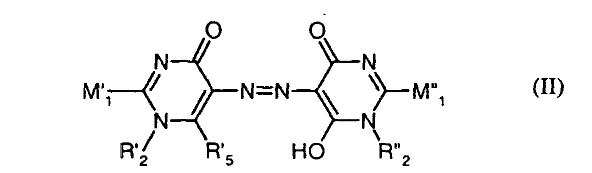 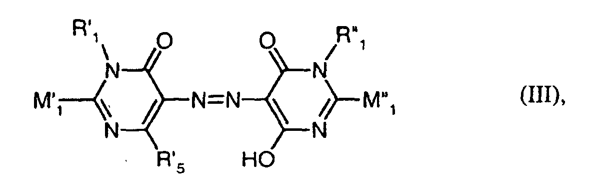 where
R'₅ is -OH or -NH₂,
R'₁, R"₁, R'₂ and R"₂ are each hydrogen, and
M'₁ and M"₁ are each independently hydrogen, -OH, -NH₂, -NHCN, arylamino or acylamino.

4. Metal complexes according to Claim 1, **characterized in that** the azo compound of the formula (I) conforms to the formula (V) or a tautomeric form thereof

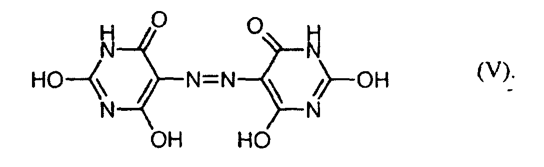

5. Metal complexes according to Claim 1, **characterized in that** the metal compounds of the azo compound of the formula (I) which are used are the salts and complexes of the mono-, di-, tri- and tetraanions with the metals Li, Cs, Mg, Cd, Co, Al, Cr, Sn, Pb, preferably Na, K, Ca, Sr, Ba, Zn, Fe, Ni, Cu and Mn.

6. Metal complexes according to Claim 1, **characterized in that** the metal compound used is the Ni salt or complex of the azo compound of the formula (I).

7. Metal complexes according to Claim 1, **characterized in that** they host a cyclic or acyclically organic compound, especially melamine, as guest compound.

8. Metal complexes according to Claim 1, **characterized in that** they have a BET specific surface area of less than 150 m²/g.

9. Process for preparing the metal complexes of Claim 1, **characterized in that** metal complexes of an azo compound of the formula (I) which contain a compound as guest compound and have a dispersion harshness of greater than 250 are prepared and heat-treated,
a) the preparation being carried out by
a1) reacting the azo compound of the formula (I) with the metal compound at a pH ≤ 2 and
a2) the subsequent intercalation taking place at a pH of 1 to 7, with the proviso that if the intercalation is carried out at pH < 4, the pH is subsequently raised to > 4.5, and
b) the heat treatment is carried out in the presence of water and optionally organic solvents either at a pH of 1 to 4, preferably 1 to 3, especially 1.5 to 2.5, or at a pH of 9 to 13, preferably of 10 to 11, and at a temperature of 90 to 140°C, especially at 95 to 100°C.

10. Pigment preparations comprising at least one metal complex according to Claim 1 and a dispersant.

11. Use of the metal complexes of Claim 1 for producing printing colours, distemper colours or binder colours, for the mass coloration of synthetic, semisynthetic or natural macromolecular substances, especially polyvinyl chloride, polystyrene, polyamide, polyethylene or polypropylene, and for the spin-dyeing of natural, regenerated or artificial fibres, for example cellulose, polyester, polycarbonate, polyacrylonitrile or polyamide fibres, and also for printing textiles and paper.

## Revendications

1. Complexes métalliques d'un dérivé azoïque qui, sous ses formes de structures tautomères, répond à la formule (I) 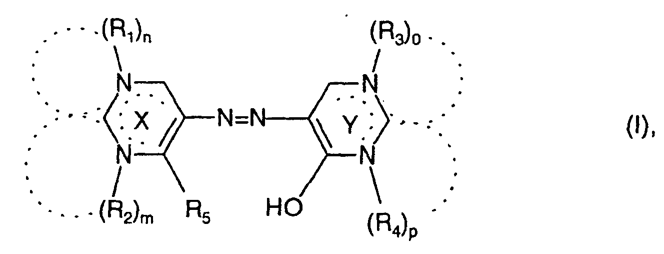 dans laquelle
les cycles X et Y peuvent porter chacun, indépendamment l'un de l'autre, un ou deux substituants choisi parmi =O, =S, =NR₇, -NR₆H₇, -OR₆, -SR₆, -COOR₆, -CN, -CONR₆R₇, -SO₂R₈, 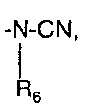 les groupes alkyle, cycloalkyle, aryle et aralkyle, la somme des doubles liaisons endo- et exo-cycliques étant de trois pour chacun des cycles X et Y,
R₆ représente l'hydrogène, un groupe alkyle, cycloalkyle, aryle ou aralkyle,
R₇ représente l'hydrogène, un groupe cyano, alkyle, cycloalkyle, aryle, aralkyle ou acyle,
R₈ représente un groupe alkyle, cycloalkyle, aryle ou aralkyle,
R₁, R₂, R₃, R₄ représentent chacun, indépendamment les uns des autres, l'hydrogène, un groupe alkyle, cycloalkyle, aryle ou aralkyle et peuvent en outre former, comme indiqué dans la formule (I) par des traits interrompus, des cycles à cinq ou six chaînons sur lesquels d'autres cycles peuvent être condensés,
R₅ représente un groupe -OH, -NR₆R₇, alkyle, cycloalkyle, aryle ou aralkyle, les substituants mentionnés pour R₁ à R₈ et qui contiennent des liaisons CH pouvant eux-mêmes être substitués ; et m, n, o, p sont égaux à 1 ou bien, dans les cas où des doubles liaisons partent des atomes d'azote cycliques, comme indiqué dans la formule (I) par les traits en pointillés, ils peuvent également être égaux à zéro,
et qui contiennent au moins un composé à l'état occlus, **caractérisés en ce qu'**ils ont une dureté à la dispersion inférieure à 250.

2. Complexes métalliques selon la revendication 1, **caractérisés en ce que**, dans le composé de formule (I), le cycle X est l'un des cycles de formule 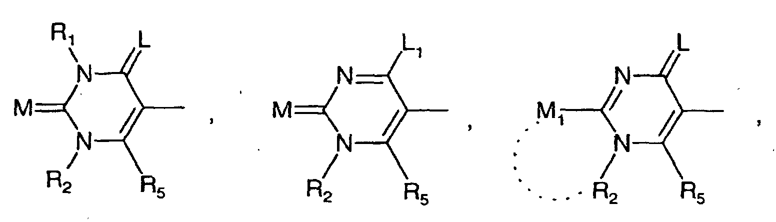 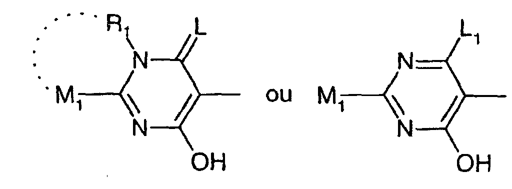 dans lesquelles
L et M représentent chacun, indépendamment l'un de l'autre, =O, =S ou =NR₆,
L₁ représente l'hydrogène, un groupe -OR₆, -SR₆, -NR₆R₇, -COOR₆, -CONR₆R₇, -CN, alkyle, cycloalkyle, aryle ou aralkyle et
M₁ représente un groupe -OR₆, -SR₆, -NR₆R₇, -COOR₆, -CONR₆R₇, -CN, SO₂R₈, 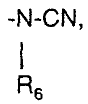 alkyle, cycloalkyle, aryle ou aralkyle,
les substituants M₁ et R₁ ou M₁ et R₂ pouvant également former un cycle à cinq ou six chaînons, et
R₁, R₂ et R₃ ont les significations indiquées dans la revendication 1.

3. Complexes métalliques selon la revendication 1, **caractérisés en ce que** le dérivé azoïque de formule (I) répond, à l'état d'acide libre, à la formule (II) ou à la formule (III) ou à l'une de leurs formules tautomères 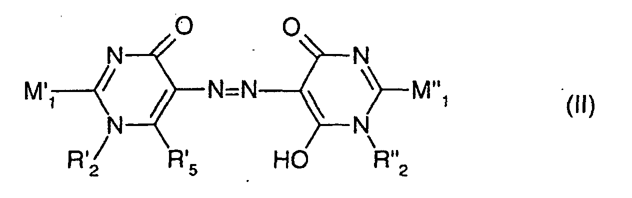 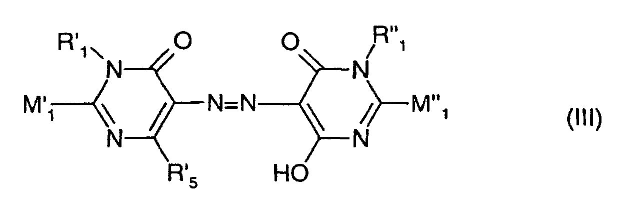 dans lesquelles
R'₅ représente -OH ou -NH₂,
R'₁, R"₁, R'₂ et R"₂ représentent chacun l'hydrogène et
M'₁ et M"₁ représentent chacun, indépendamment l'un de l'autre, l'hydrogène, -OH, -NH₂, -NHCN, un groupe arylamino ou acylamino.

4. Complexes métalliques selon la revendication 1, **caractérisés en ce que** le dérivé azoïque de formule (I) répond à la formule (V) ou à une formule tautomère

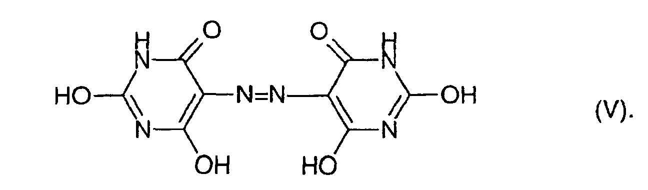

5. Complexes métalliques selon la revendication 1, **caractérisés en ce que** l'on utilise en tant que dérivés métalliques du dérivé azoïque de formule (I) les sels et complexes des mono-, di-, tri- et tétra-anions et des métaux Li, Cs, Mg, Cd, Co, Al, Cr, Sn, Pb, de préférence Na, K, Ca, Sr, Ba, Zn, Fe, Ni, Cu et Mn.

6. Complexes métalliques selon la revendication 1, **caractérisés en ce que** l'on utilise en tant que dérivé métallique le sel ou complexe métallique de nickel du dérivé azoïque de formule (I).

7. Complexes métalliques selon la revendication 1, **caractérisés en ce qu'**ils contiennent à l'état occlus un dérivé organique cyclique ou acyclique, plus spécialement la mélamine.

8. Complexes métalliques selon la revendication 1, **caractérisés en ce qu'**ils ont une surface spécifique BET inférieure à 150 m²/g.

9. Procédé pour la préparation des complexes métalliques selon la revendication 1, **caractérisé en ce que** l'on prépare des complexes métalliques d'un dérivé azoïque de formule (I) contenant un composé en occlusion et ayant une dureté à la dispersion supérieure à 250 et on les cuit,
a) la préparation étant réalisée par
a1) réaction du dérivé azoïque de formule (I) avec le dérivé métallique à un pH ≤ 2 et
a2) l'intercalation subséquente à un pH de 1 à 7, sous réserve que lorsque l'intercalation est réalisée à un pH < 4, on relève ensuite le pH à un niveau > 4,5 et
b) la cuisson étant réalisée en présence d'eau et, le cas échéant, de solvants organiques soit à un pH de 1 à 4, de préférence de 1 à 3 et plus spécialement de 1,5 à 2,5, soit à un pH de 9 à 13, de préférence de 10 à 11, et à une température de 90 à 140°C, plus spécialement de 95 à 110°C.

10. Compositions pigmentaires contenant au moins un complexe métallique selon la revendication 1 et un agent dispersant.

11. Utilisation des complexes métalliques selon la revendication 1 pour la préparation d'encres. d'impression, de peintures à la colle ou de peintures à liants, pour la coloration dans la masse de matières macromoléculaires synthétiques, semi-synthétiques ou naturelles, en particulier du chlorure de polyvinyle, du polystyrène, des polyamides, du polyéthylène ou de polypropylène, ou pour la coloration au filage de filtres naturelles, régénérées ou artificielles, par exemple de fibres cellulosiques, de fibres de polyester, de polycarbonate, de polyacrylonitrile ou de polyamide, et pour l'impression de textiles et du papier.
